# EUROPÄISCHE PATENTANMELDUNG

(11) **EP 2 165 919 A1**
(43) Veröffentlichungstag der Anmeldung: **24.03.2010**
(21) Anmeldenummer: 08164690.3
(22) Anmeldetag: 19.09.2008
(51) Int. Cl.: B62D 21/15, B62D 29/00

(54) **Verstärkte Struktur eines Fahrzeugs**

(71) Anmelder: Sika Technology AG, 6340 Baar (CH)
(72) Erfinder: Kraushaar, Thomas, 8037, Zürich (CH)
(74) Vertreter: Sika Patent Attorneys

(57) **Zusammenfassung**

Bei einer verstärkten Struktur umfassend ein strukturelles Bauteil (2) sowie ein im Hohlraum (3) des strukturellen Bauteils (2) angeordnetes Verstärkungsteil (4), wobei dieses Verstärkungsteil ein Trägerteil (5) und ein Verbindungsmittel (6) umfasst, ist das Trägerteil (5) so im Hohlraum (3) angeordnet ist, dass der Abstand zwischen Trägerteil (5) und strukturellem Bauteil (2) an Stellen des strukturellen Bauteils (2) mit höherer (7) Verformungswahrscheinlichkeit bei Krafteinwirkung (8) von aussen auf das strukturelle Bauteil (2) kleiner ist gegenüber Stellen des strukturellen Bauteil (2) mit tieferer (9) Verformungswahrscheinlichkeit bei Krafteinwirkung (8) von aussen.

## Beschreibung

### Technisches Gebiet

Die Erfindung geht aus von einer verstärkten Struktur umfassend ein strukturelles Bauteil sowie ein im Hohlraum des strukturellen Bauteils angeordnetes Verstärkungsteil umfassend ein Trägerteil und ein, zwischen strukturellem Bauteil und Trägerteil angeordnetes, Verbindungsmittel, nach dem Oberbegriff des ersten Anspruches.

Weiterhin geht die Erfindung aus von einem Verstärkungsteil und einem Verfahren zur Verstärkung von strukturellen Bauteilen nach dem Oberbegriff weiterer unabhängiger Ansprüche.

### Stand der Technik

Oftmals werden bei Konstruktionen jeglicher Art, insbesondere bei Transportmittelstrukturen, hohlräumige strukturelle Bauteile eingesetzt. Diese Bauweise erlaubt es, das Gewicht der Konstruktion und den Materialaufwand niedrig zu halten. Dies kann jedoch zu einer Herabsetzung der Stabilität des Bauteils führen, was besonders im Falle der Stabilität bei Verkehrsunfällen für Transportmittelstrukturen ein Problem darstellt.

Um der Herabsetzung der Stabilität entgegenzuwirken und gleichzeitig die Verwendung von Hohlräumen zu ermöglichen, werden in solchen Hohlräumen typischerweise Verstärkungsteile eingesetzt. Solche Verstärkungsteile umfassen normalerweise Trägerteile, welche typischerweise aus steifen Materialien bestehen, sowie Verbindungsmittel, welche das Verstärkungsteil im Hohlraum fest verankern.

Die so verstärkten strukturellen Bauteile, im Folgenden auch verstärkte Strukturen genannt, haben den Nachteil, dass sie einerseits gleichmässig gegen Belastungen von Aussen verstärkt sind, und andererseits oft eine gleichmässige Menge an Verbindungsmittel zwischen Trägerteil und strukturellem Bauteil aufweisen. Beides führt zu einem hohen Materialaufwand und Gewicht des Verstärkungsteils und somit der verstärkten Struktur.

### Darstellung der Erfindung

Aufgabe der vorliegenden Erfindung ist es daher, bei einer verstärkten Struktur der eingangs genannten Art das Gewicht zu verringern und gleichzeitig die benötigte Stabilität zu gewährleisten.

Erfindungsgemäss wird dies durch die Merkmale des ersten Anspruches erreicht.

Kern der Erfindung ist es also, dass das Trägerteil so im Hohlraum angeordnet ist, dass der Abstand zwischen Trägerteil und strukturellem Bauteil an Stellen des strukturellen Bauteils mit höherer Verformungswahrscheinlichkeit bei Krafteinwirkung von aussen auf das strukturelle Bauteil kleiner ist gegenüber Stellen des strukturellen Bauteil mit tieferer Verformungswahrscheinlichkeit bei Krafteinwirkung von aussen.

Es ist besonders zweckmässig, wenn die Menge an Verbindungsmittel kleiner ist an Stellen des strukturellen Bauteils mit höherer Verformungswahrscheinlichkeit bei Krafteinwirkung von aussen auf das strukturelle Bauteil gegenüber Stellen des strukturellen Bauteils mit tieferer Verformungswahrscheinlichkeit bei Krafteinwirkung von aussen. Das Verbindungsmittel, insbesondere wenn es sich um ein geschäumtes Material handelt, hat üblicherweise eine geringere Verstärkungseigenschaft im Bezug auf die Stabilität des strukturellen Bauteils als das Trägerteil. Eine geringere Menge an Verbindungsmittel an erwähnter Stelle erlaubt also eine nähere Positionierung des Trägerteils, welches üblicherweise eine höhere Verstärkungseigenschaft aufweist, am strukturellen Bauteil an erwähnter Stelle. Dadurch behält das strukturelle Bauteil im Belastungsfall seine ursprüngliche Form, insbesondere seinen ursprünglichen Querschnitt, eher bei, was sich vorteilhaft auf die Stabilität des strukturellen Bauteils auswirkt.

Die Vorteile der Erfindung sind unter anderem darin zu sehen, dass durch eine erfindungsgemässe Bauweise die verstärkte Struktur im Vergleich zur Bauweise im Stand der Technik stabiler gegenüber erwähnter Krafteinwirkung von aussen ist und dadurch mit weniger Material für das Verstärkungsteil, und dadurch mit weniger Gewicht, hergestellt werden kann, um die gewünschte Stabilität zu gewährleisten.

Weitere vorteilhafte Ausgestaltungen der Erfindung ergeben sich aus den Unteransprüchen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnung

Im Folgenden werden anhand der Zeichnungen Ausführungsbeispiele der Erfindung näher erläutert. Gleiche Elemente sind in den verschiedenen Figuren mit den gleichen Bezugszeichen versehen.

### Es zeigen:

Fig. 1a-1c schematische Querschnitte durch erfindungsgemäss verstärkte Strukturen mit einem erfindungsgemässen Verstärkungsteil in einem Hohlraum eines strukturellen Bauteils nach Aktivierung des Verbindungsmittels.
Fig. 2a - 2d schematische Querschnitte durch erfindungsgemäss verstärkte Strukturen mit einem erfindungsgemässen Verstärkungsteil mit Rippen und Rippenträger in einem Hohlraum eines strukturellen Bauteils nach Aktivierung des Verbindungsmittels.
Fig. 3a - 3d schematische Querschnitte durch erfindungsgemäss verstärkte Strukturen mit einem erfindungsgemässen Verstärkungsteil in einem Hohlraum eines strukturellen Bauteils vor Aktivierung des Verbindungsmittels.
Fig. 4a - 4d schematische Querschnitte durch erfindungsgemäss verstärkte Strukturen mit einem erfindungsgemässen Verstärkungsteil mit Rippen und Rippenträger in einem Hohlraum eines strukturellen Bauteils vor Aktivierung des Verbindungsmittels.

Es sind nur die für das unmittelbare Verständnis der Erfindung wesentlichen Elemente gezeigt.

### Wege zur Ausführung der Erfindung

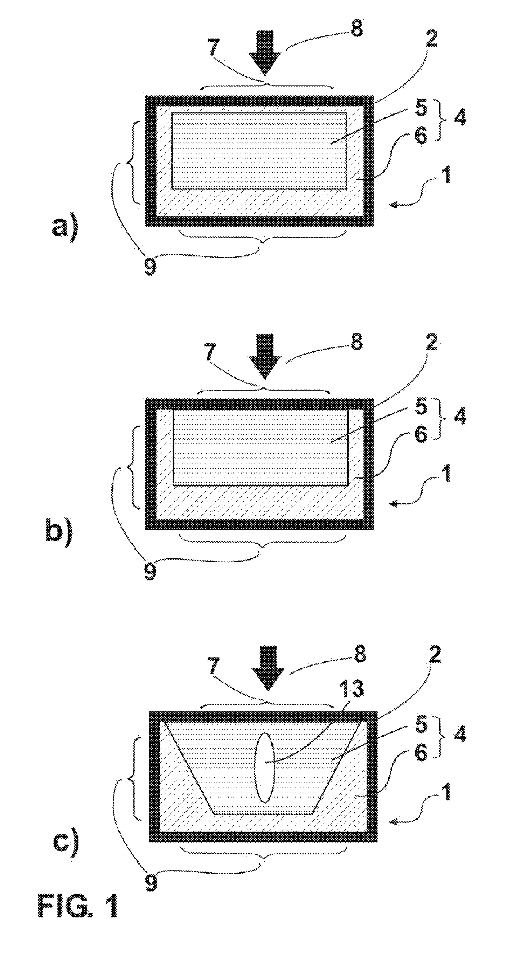

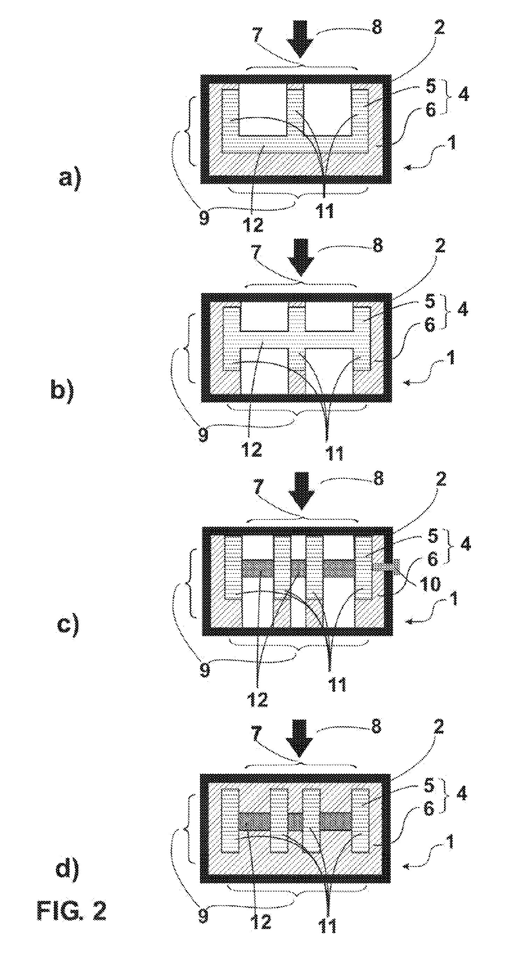

In den Figuren 1a - 1c und 2a - 2d sind jeweils eine erfindungsgemässe verstärkte Struktur 1 umfassend ein strukturelles Bauteil 2 sowie ein im Hohlraum 3 des strukturellen Bauteils angeordnetes Verstärkungsteil 4, wobei dieses Verstärkungsteil 4 ein Trägerteil 5 und ein, zwischen strukturellem Bauteil 2 und Trägerteil 5 angeordnetes, Verbindungsmittel 6 umfasst, dargestellt. Eine solche verstärkte Struktur 1 umfasst ein Trägerteil 5, welches so im Hohlraum 3 angeordnet ist, dass der Abstand zwischen Trägerteil und strukturellem Bauteil 2 an Stellen des strukturellen Bauteils mit höherer 7 Verformungswahrscheinlichkeit bei Krafteinwirkung 8 von aussen auf das strukturelle Bauteil kleiner ist gegenüber Stellen des strukturellen Bauteil mit tieferer 9 Verformungswahrscheinlichkeit bei Krafteinwirkung 8 von aussen.

Strukturelle Bauteile werden in der Regel an Orten verstärkt, wo eine besondere Belastung auf das strukturelle Bauteil zu erwarten ist. Solche zu erwartenden Belastungen oder Lastfälle sind oft als standardisierte Lastfälle bekannt und erlauben dem Fachmann, das Verhalten, insbesondere das Verformungsverhalten, von strukturellen Bauteilen im Falle einer Krafteinwirkung von aussen auf das strukturelle Bauteil zu untersuchen. Solche standardisierten Lastfälle sind insbesondere in der Fahrzeugindustrie von grosser Bedeutung. Sie erlauben es, das Verhalten von verstärkten Strukturen in typischen Belastungsfällen, insbesondere bei Fahrzeugunfällen, anhand von standardisierten Lastfällen zu analysieren. Die Fahrzeugindustrie kennt eine Vielzahl von solchen standardisierten Lastfällen, insbesondere den Blockanprall, Anprall gegen Hindernis, Schutzplanken-Anprall, Fahrzeug-Fahrzeug-Anprall, Seitenanprall oder Rückseitenanprall. Standardisierte Lastfälle beinhalten unter anderem Crashtest-Programme wie das European New Car Assessment Program (Euro NCAP) oder das US New Car Assessment Program (US NCAP). Die Krafteinwirkung 8 von aussen kann also einem standardisierten Lastfall entspricht, insbesondere einem standardisierten Lastfall aus der Fahrzeugindustrie, wie sie vorhergehend erwähnt wurden.

Verformt sich ein strukturelles Bauteil 2 aufgrund einer Krafteinwirkung 8 von aussen, büsst das strukturelle Bauteil üblicherweise von seiner Stabilität ein.
Die Widerstandsfähigkeit gegenüber Druckkräften, insbesondere die Widerstandsfähigkeit gegenüber Verformung bei Krafteinwirkung von aussen, ist insbesondere dann von Wichtigkeit, wenn die Form des strukturellen Bauteils, insbesondere der Querschnitt, so ausgestaltet ist, dass das strukturelle Bauteil einen Beitrag zur Stabilität das Transportmittel liefert. Ist das strukturelle Bauteil 2 beispielsweise ein B-Träger eines Fahrzeugs, so verliert das strukturelle Bauteil im Falle einer Verformung, insbesondere wenn sich die Verformung auf den Querschnitt auswirkt, beispielsweise bei einem Knick, aufgrund einer Krafteinwirkung 8 von aussen an Stabilität. Dies hat zur Folge, dass die Stabilität des Fahrzeugs auch abnimmt.

Die Verformungswahrscheinlichkeit lässt sich einerseits empirisch, insbesondere in realen Belastungsversuchen, ermitteln. Solche Versuche benötigen jedoch oft die Konstruktion eines Prototyps und sind dadurch mit hohem Zeitaufwand und hohen Kosten verbunden. Daher ist es vorteilhaft, wenn man die Anzahl der realen Belastungsversuche auf wenige Versuche mit fertig entwickelten Bauteilen reduzieren kann. Andererseits ist die Verformungswahrscheinlichkeit theoretisch, insbesondere unter Zuhilfenahme eines Finite-Elemente Modells (FE Modell), bestimmbar, beispielsweise einem FE-Modell eines Verstärkungsteils 4 im Hohlraum 3 des strukturellen Bauteils 2. Solche Bestimmungen lassen sich unter anderem mit Hilfe von Rechnern durchführen und sind somit schneller und billiger als die realen Belastungsversuche und besonders während der Entwicklung von Bauteilen geeignet.

Im Fahrzeugbau werden Softwareprogramme eingesetzt, die FE-Modelle zur Simulation von Lastfällen, insbesondere Fahrzeugunfälle, verwendet, wie beispielsweise PAM-Crash von ESI-Group, Frankreich oder LS Dyna® von Livermore Software Technology Corporation, USA.

Erfindungsgemäss wird das Trägerteil 5 so im Hohlraum 3 angeordnet, dass der Abstand zwischen Trägerteil und strukturellem Bauteil 2 an Stellen des strukturellen Bauteils mit höherer 7 Verformungswahrscheinlichkeit bei Krafteinwirkung 8 von aussen auf das strukturelle Bauteil 2 kleiner ist gegenüber Stellen des strukturellen Bauteil mit tieferer 9 Verformungswahrscheinlichkeit bei Krafteinwirkung von aussen. Mit zunehmender Nähe des Trägerteils sinkt die Verformungswahrscheinlichkeit des strukturellen Bauteils 2 und damit steigt die Stabilität des strukturellen Bauteils.

Vorteilhafterweise beträgt der Abstand zwischen Trägerteil 5 und strukturellem Bauteil 2 an der Stelle des strukturellen Bauteils mit der höchsten Verformungswahrscheinlichkeit bei Krafteinwirkung 8 von aussen 20 - 0 mm, insbesondere 10 - 0 mm, bevorzugt 5 bis 0 mm.

Es ist besonders zweckmässig, wenn die Menge an Verbindungsmittel 6 zwischen strukturellem Bauteil 2 und Trägerteil 5 kleiner ist an Stellen des strukturellen Bauteils 2 mit höherer 7 Verformungswahrscheinlichkeit bei Krafteinwirkung 8 von aussen auf das strukturelle Bauteil gegenüber Stellen des strukturellen Bauteils 2 mit tieferer 9 Verformungswahrscheinlichkeit bei Krafteinwirkung von aussen. Dies ist beispielsweise in den Figuren 1a, 2a, 2b und 2d gezeigt. Es kann insbesondere von Vorteil sein, wenn gar kein Verbindungsmittel an Stellen des strukturellen Bauteils 2 mit höherer 7 Verformungswahrscheinlichkeit vorhanden ist, wie dies beispielsweise in den Figuren 1b, 1c und 2c gezeigt ist.

Insbesondere kann die Menge an Verbindungsmittel an der Stelle des strukturellen Bauteils 2 mit der höchsten Verformungswahrscheinlichkeit 0 - 60%, bevorzugt 10 - 30% der Menge an Verbindungsmittel an der Stelle des strukturellen Bauteils 2 mit der tiefsten Verformungswahrscheinlichkeit bei Krafteinwirkung von aussen aufweisen.

Das Verbindungsmittel 6, insbesondere wenn es sich um ein geschäumtes Material handelt, hat in seinem aktivierten Zustand üblicherweise eine geringere Verstärkungseigenschaft als das Trägerteil 5. Eine geringere Menge an Verbindungsmittel 6 an erwähnter Stelle erlaubt also eine nähere Positionierung des Trägerteils, welches üblicherweise eine höhere Verstärkungseigenschaft aufweist, am strukturellen Bauteil an erwähnter Stelle. Dadurch behält das strukturelle Bauteil 2 im Belastungsfall seine Form, insbesondere seinen Querschnitt, eher bei, was sich vorteilhaft auf die Stabilität des strukturellen Bauteils auswirkt.

Das strukturelle Bauteil 2 kann aus jedem Material bestehen und jede Form aufweisen. Das strukturelle Bauteil 2 besteht typischerweise aus Metall, insbesondere Aluminium oder Stahl. Beispielsweise handelt es sich bei derartigen strukturellen Bauteilen um Karosserien und/oder Rahmen von Transport- und Fortbewegungsmitteln, insbesondere von Fahrzeugen zu Wasser oder zu Land oder von Luftfahrzeugen, wie Karosserien oder Rahmen von Automobilen, Lastkraftwagen, Eisenbahnwagen, Booten, Schiffen, Hubschraubern und Flugzeugen, meist bevorzugt von Automobilen. Natürlich kann es sich bei derartigen strukturellen Bauteilen 2 um jegliche industriell gefertigte Artikel handeln wie beispielsweise Waschmaschinen.

Bevorzugt handelt es sich um strukturelle Bauteile 2, die bei ihrer Fertigung oberflächenbehandelt, typischerweise in Tauchbädern behandelt werden, insbesondere in Reinigungs-, Phosphatierungs-, beziehungsweise Tauchlackierungsbädern gereinigt, phosphatiert, beziehungsweise beschichtet werden. Diese Oberflächenbehandlungen dienen typischerweise dem Korrosionsschutz.

Die verstärkte Struktur 1 umfasst ein im Hohlraum 3 des strukturellen Bauteils 2 angeordnetes Verstärkungsteil 4 umfassend ein Trägerteil 5 und ein, zwischen strukturellem Bauteil 2 und Trägerteil 5 angeordnetes, Verbindungsmittel 6.

Als Verbindungsmittel 6 kann grundsätzlich jedes beliebige Material eingesetzt werden, welches geeignet ist, das Trägerteil 5 im Hohlraum 3 des strukturellen Bauteils 2 zu fixieren. Neben der erwähnten Verbundfunktion, kann das Verbindungsmittel auch Dicht- und Verstärkungsfunktionen übernehmen.

Das Verbindungsmittel 6 kann mit der gesamten, dem strukturellen Bauteil 2 zugewanden Aussenseite des Trägerteils 5 in Verbindung sein, wie beispielsweise in den Figuren 1a oder 2d gezeigt, oder nur teilweise, wie beispielsweise in den Figuren 1b, 1c, 2a, 2b oder 2c gezeigt.

Vorteilhafterweise wurde das Verbindungsmittel der verstärkten Struktur thermisch, durch Feuchtigkeit oder durch elektromagnetische Strahlung, insbesondere thermisch, aktiviert. Der Einsatz von aktivierbaren Verbindungsmitteln erlaubt es, strukturelle Bauteile 2 während ihrer Herstellung erst dann zu verstärken und/oder abzudichten, wenn die strukturellen Bauteile oberflächenbehandelt wurden. Dies ist etwa bei der Herstellung von Transportmittelstrukturen der Fall. Nach dem Einsetzen von Verstärkungsteilen 4, jedoch vor der Aktivierung der Verbindungsmittel 6, werden die strukturellen Bauteile üblicherweise oberflächenbehandelt, insbesondere in Reinigungs-, Phosphatierungs- und/oder Tauchlackierungsbädern behandelt, um das strukturelle Bauteil vor Korrosion zu schützen.

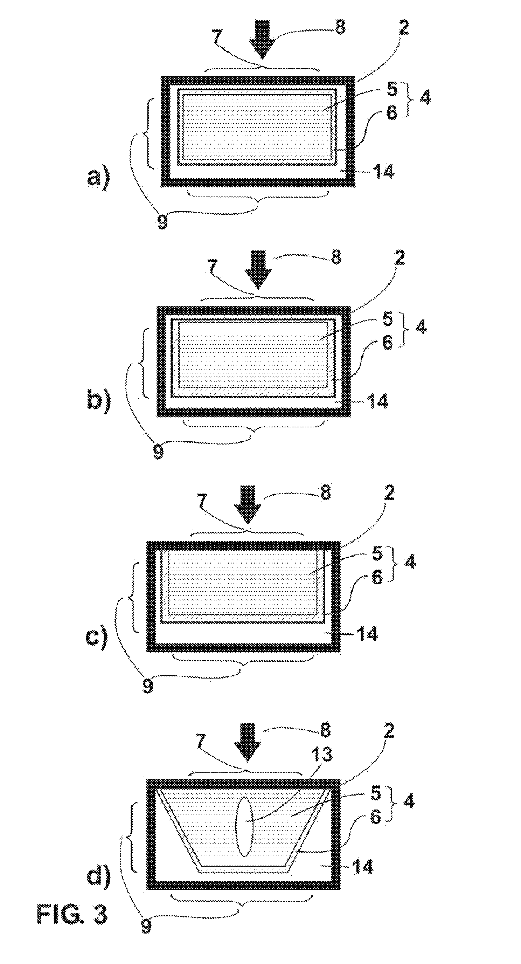

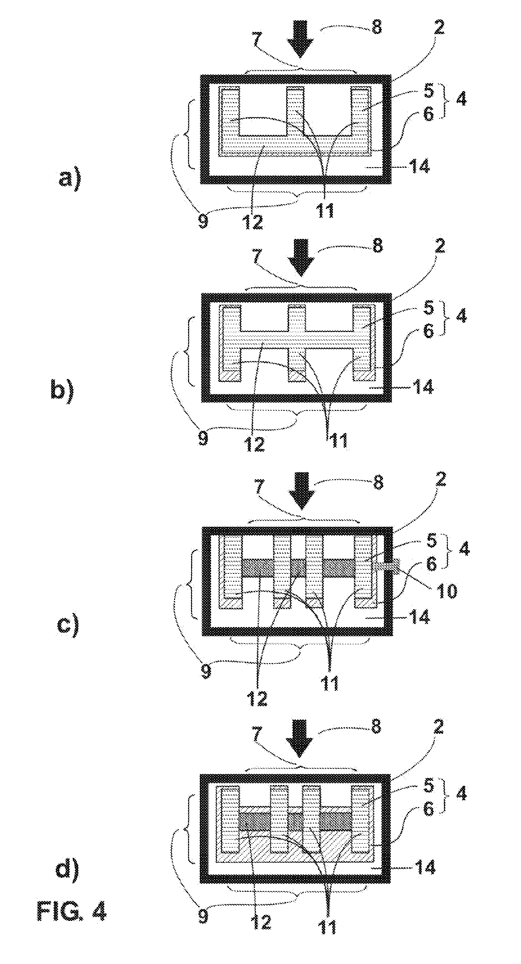

Typischerweise bleibt vor der Aktivierung des Verbindungsmittels 6, wie in den Figuren 3a - 3d und 4a - 4d gezeigt, ein Zwischenraum 14 zwischen Verbindungsmittel und strukturellem Bauteil 2 zur Zirkulation von Oberflächenbehandlungsmitteln, insbesondere Flüssigkeiten, während der Oberflächenbehandlung.

Das aktivierbare Verbindungsmittel kann jedoch auch auf dem strukturellen Bauteil aufgetragen werden oder auf jede andere Art und Weise zwischen strukturellem Bauteil und Trägerteil angeordnet werden.

Das Verbindungsmittel 6 der verstärkten Struktur 1 kann ein geschäumtes Material und/oder eine ausgehärtete Klebstoffzusammensetzung sein.

Als geschäumtes Material kann dabei grundsätzlich jedes beliebige schäumbare Material eingesetzt werden, insbesondere solches, das durch Aktivierung kontrolliert zur Schäumung gebracht werden kann. Dieses Material kann dabei Verstärkungseigenschaften aufweisen oder auch nicht. Typischerweise wird das schäumbare Material thermisch, durch Feuchtigkeit oder durch elektromagnetische Strahlung geschäumt.
Ein solches schäumbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage Schaumstrukturen in Polymeren zu erzeugen.

Bevorzugt wird das schäumbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel® von der Firma Akzo Nobel, Niederlande, oder unter dem Handelsnamen Celogen® von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von 110°C bis 250 °C, insbesondere von 150°C bis 200 °C, bevorzugt von 160 °C bis 180 °C, schäumbar.

Als schäumbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Neben Epoxid-Festharzen eignen sich auch kristalline Polyepoxide wie Triglycidylisocyanurate, Terephthalsäurediglycidylether, Gemische aus Terephthalsäurediglycidylether mit Trimellitsäuretriglycidylether , Hydrochinondiglycidylether sowie Addukte aus Trimethylolpropandiglycidylether mit Diisocyanaten wie 4,4'-, 2,4'- und 2,2'-Diphenylmethandiisocyanat (MDI), 2,4- und 2,6-Toluylendiisocyanat (TDI) oder 1-Isocyanato-3,3,5-trimethyl-5-isocyanatomethyl-cyclohexan (IPDI).

Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete schäumbare Materialien sind Treibmittel enthaltende einkomponentige Polyurethanzusammensetzungen aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als schäumbare Materialien Treibmittel enthaltende zweikomponentige Epoxid/Polyurethan-Zusammensetzungen, wie sie beispielsweise beschrieben sind in WO 2005/080524 A1, dessen Offenbarung hiermit eingeschlossen ist.

Ebenfalls geeignete schäumbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben, deren Offenbarung hiermit eingeschlossen ist.

Als schäumbare Materialien mit Verstärkungseigenschaften sind beispielsweise diejenigen bevorzugt, welche unter dem Handelsnamen SikaReinforcer^{®} 941 von der Sika Corp., USA, vertrieben werden. Diese sind beschrieben in US 6,387,470, dessen Offenbarung hiermit eingeschlossen ist.

Im geschäumten Zustand kann das schäumbare Material insbesondere Dicht-, Verbund- und/oder Verstärkungsfunktionen, bevorzugt Verbundfunktionen übernehmen.

Als ausgehärtete Klebstoffzusammensetzungen können verschiedene Systeme zur Anwendung kommen, insbesondere solche, welche durch Aktivierung kontrolliert zur Aushärtung gebracht werden können. Dies geschieht vorzugsweise thermisch, durch Feuchtigkeit, elektromagnetische Strahlung oder Partikelstrahlung, insbesondere thermisch.

Als härtende Klebstoffzusammensetzungen eignen sich insbesondere hitzehärtende Klebstoffzusammensetzungen, welche bei einer Temperatur von von ≥ 110 °C, insbesondere von 150 °C bis 220 °C, bevorzugt von 160 °C bis 200 °C, aushärten.

Bevorzugt ist die härtende Klebstoffzusammensetzung eine einkomponentige Epoxidharzzusammensetzung, eine einkomponentige Polyurethanzusammensetzung oder eine einkomponentige Acrylatzusammensetzung.

Meist bevorzugt ist die härtende Klebstoffzusammensetzung eine einkomponentige, hitzehärtende Epoxidharzzusammensetzung umfassend mindestens ein Epoxidharz **A** und mindestens einen Härter **B** für Epoxidharze, welcher durch erhöhte Temperatur aktiviert wird.

Das Epoxidharz **A**, welches durchschnittlich mehr als eine Epoxidgruppe pro Molekül aufweist, ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharz" verwendet. Die Glastemperatur von Festharzen liegt über Raumtemperatur, d.h. sie lassen sich bei Raumtemperatur zu schüttfähigen Pulvern zerkleinern.

Derartige Epoxid-Festharze sind beispielsweise kommerziell erhältlich von The Dow Chemical Company, USA, von Huntsman International LLC, USA, oder von Hexion Specialty Chemicals Inc, USA.

Derartige Flüssigharze sind beispielsweise unter den Handelsnamen Araldite® GY 250, Araldite® PY 304, Araldite® GY 282 von der Firma Huntsman International LLC, USA, oder D.E.R.® 331 oder D.E.R.® 330 von der Firma The Dow Chemical Company, USA, oder unter dem Handelsnamen Epikote® 828 oder Epikote® 862 von der Firma Hexion Specialty Chemicals Inc, USA, kommerziell erhältlich.

Der Härter **B** für Epoxidharze wird durch erhöhte Temperatur aktiviert. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-Chlor-4-Methyl-phenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole und Amin-Komplexe eingesetzt werden.

Ebenfalls geeignet ist die härtende Klebstoffzusammensetzung eine einkomponentige, hitzehärtende Polyurethanzusammensetzung, welche aufgebaut ist aus polymeren Polyolen und Polyisocyanaten. Geeignete Polyisocyanate sind insbesondere Di- und Triisocyanate.

Die Polyurethanzusammensetzung enthält weiterhin mindestens einen Härter **B**', welcher gegenüber Isocyanaten reaktive Gruppen enthält und in blockierter Form vorliegt. Die Blockierung kann dabei chemischer oder physikalischer Natur sein.

Weiterhin kann die härtende Klebstoffzusammensetzung eine einkomponentige, hitzehärtende Acrylatzusammensetzung sein. Diese umfasst vorzugsweise mindestens ein zwei- oder mehrwertiges Acryl- oder Methacrylgruppen enthaltendes Monomer sowie mindestens ein monofunktionelles Acryl- oder Methacrylgruppen enthaltendes Monomer.

Als Härter **B**" enthält die Acrylatzusammensetzung einen thermischen Initiator in blockierter Form, welcher die Polymerisation der Acrylat- oder Methacrylatmonomere auslöst.

Es kann weiterhin von Vorteil sein, dass die härtende Klebstoffzusammensetzung beim Aushärten eine Expansion von 0 bis 5% aufweist.

Das Trägerteil 5 kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone; Verbundstoffe, insbesondere aus Polyamiden und Glasfaser; Metalle, insbesondere Aluminium und Stahl; oder beliebige Kombinationen dieser Materialien.

Weiterhin kann das Trägerteil 5 einen beliebigen Aufbau und eine beliebige Struktur aufweisen. Es kann beispielsweise massiv, wie in den Figuren 1a, 1b, 3a, 3b und 3c gezeigt, oder hohl sein, oder durchgehende Öffnungen 13 aufweisen, wie in den Figuren 1c und 3d gezeigt.

Wie in den Figuren 2a - 2d und 4a - 4d gezeigt, kann das Trägerteil 5 mindestens eine Rippe 11 und mindestens einen Rippenträger 12, insbesondere mindestens einen im Wesentlichen senkrecht zur mindestens einen Rippe angeordneten Rippenträger, aufweisen.

Trägerteile 5, welche durchgehende Öffnungen und/oder Rippen und Rippenträger aufweisen, sind dahingehend von Vorteil, dass Oberflächenbehandlungsflüssigkeiten besser im strukturellen Bauteil 2 zirkulieren können. Des Weiteren weisen solche Trägerteile ein geringeres Gewicht auf und benötigen bei ihrer Fertigung weniger Material.

Weiterhin kann das Trägerteil 5 aus einer Komponente bestehen, wie beispielsweise in Figuren 2a, 2b, 4a, oder 4b gezeigt, oder aus mehreren Komponenten, welche miteinander verbunden sind, wie in den Figuren 2c, 2d, 4c und 4d gezeigt.

Weiterhin umfasst die Erfindung ein Verstärkungsteil 4 zur Verstärkung von Hohlräumen 3 von strukturellen Bauteilen 2 umfassend ein Trägerteil 5 und ein Verbindungsmittel 6, welches aktivierbar ist und auf der Aussenseite des Trägerteils 5 angebracht ist. Typischerweise handelt es sich um Verstärkungsteile sowie strukturelle Bauteile, wie sie vorhergehend als geeignet für die verstärkte Struktur 1 erwähnt wurden.

Das Verstärkungsteil 4 ist vorteilhaft so ausgeformt ist, dass nach der Aktivierung des Verbindungsmittel 6 der Abstand zwischen Trägerteil 5 und strukturellem Bauteil 2 an Stellen des strukturellen Bauteils mit höherer 7 Verformungswahrscheinlichkeit bei Krafteinwirkung 8 von aussen auf das strukturelle Bauteil 2 kleiner ist gegenüber Stellen des strukturellen Bauteils mit tieferer 9 Verformungswahrscheinlichkeit bei Krafteinwirkung 8 von aussen. Bei der Krafteinwirkung 8 von aussen handelt es sich insbesondere um einen Lastfall bei Fahrzeugunfällen, bevorzugt um ein Blockanprall, Anprall gegen Hindernis, Schutzplanken-Anprall, Fahrzeug-Fahrzeug-Anprall, Seitenanprall oder Rückseitenanprall. Die Verformungswahrscheinlichkeit wird insbesondere durch Zuhilfenahme eines FE-Modells des Verstärkungsteils 4 im Hohlraum 3 des strukturellen Bauteils 2 bestimmt.

Es ist weiterhin von Vorteil, dass die Menge an Verbindungsmittel 6 kleiner ist an Stellen des strukturellen Bauteils mit höherer 7 Verformungswahrscheinlichkeit bei Krafteinwirkung von aussen auf das strukturelle Bauteil gegenüber Stellen des strukturellen Bauteils mit tieferer 9 Verformungswahrscheinlichkeit bei Krafteinwirkung von aussen.

Es auch von Vorteil, dass das Verbindungsmittel 6 thermisch, durch Feuchtigkeit oder durch elektromagnetische Strahlung, insbesondere thermisch, aktivierbar ist.

Es ist des Weiteren von Vorteil, dass das Verbindungsmittel 6 ein schäumbares Material und/oder ein Klebstoff, insbesondere ein Klebstoff, der bei der Aktivierung eine Expansion von 0 - 5 % aufweist, ist.

Es ist vorteilhaft, dass das Trägerteil 5 mindestens eine Rippe 11 und mindestens einen Rippenträger 12, insbesondere mindestens einen im Wesentlichen senkrecht zur mindestens einen Rippe angeordneten Rippenträger, aufweist.

Es ist weiterhin von Vorteil, dass vor Aktivierung des Verbindungsmittels 6 der Abstand zwischen Verstärkungsteil 4 und strukturellem Bauteil 2 den Zugang von Flüssigkeiten, insbesondere Oberflächenbehandlungsflüssigkeiten, zu der dem Verstärkungsteil 4 zugewandten Oberfläche des strukturellen Bauteils ermöglicht.

Die Vorteile der erwähnten Ausführungsformen wurden vorhergehend erwähnt.

Weiterhin umfasst die Erfindung ein Verfahren zur Verstärkung von strukturellen Bauteilen 2 durch Platzieren von mindestens einem Verstärkungsteil 4, umfassend ein Trägerteil 5 und ein, aktivierbares und zwischen strukturellem Bauteil 2 und Trägerteil 5 angeordnetes, Verbindungsmittel 6, im Hohlraum 3 des strukturellen Bauteils. Das Verfahren umfasst die Schritte:
i) Erstellen eines FE-Modells des strukturellen Bauteils 2, in dessen Hohlraum 3 das mindestens eine Verstärkungsteil 4 angeordnet ist;
ii) Berechnung des Crashverhaltens des FE-Modells;
iii) Verringerung der Menge aktivierbaren Verbindungsmittels an Stellen mit hoher Verformung gegenüber Stellen mit geringer Verformung des strukturellen Bauteils, insbesondere im Querschnitt des strukturellen Bauteils, im berechneten Crashverhalten des FE-Modells;
iv) Herstellung des Verstärkungsteils, welches eine Verteilung des Verbindungsmittels entsprechend den Erkenntnissen aus den vorhergegangenen Schritten aufweist;
v) Plazieren des Verstärkungsteils im Hohlraum des strukturellen Bauteils;
vi) Aktivieren des Verbindungsmittels 6.

Insbesondere handelt es sich bei dem Crashverhalten von Schritt ii) um ein Verhalten bei einem standardisierten Lastfall aus der Fahrzeugindustrie, insbesondere einem standardisierten Lastfall bei Fahrzeugunfällen.

Typischerweise handelt es sich um Verstärkungsteile 4 sowie strukturelle Bauteile 2, wie sie vorhergehend als geeignet für die verstärkte Struktur 1 erwähnt wurden

Wie vorhergehend erwähnt, können FE-Modelle mit Vorteil zur Konzipierung und Optimierung der Verstärkungsteile 4 und der verstärkten Strukturen 1 eingesetzt werden. Es kann insbesondere von Vorteil sein, beim Verfahren zur Verstärkung von strukturellen Bauteilen 2 Minimalanforderung und/oder Maximalanforderungen an das FE-Modell im Crashverhalten festzulegen, wie beispielsweise die Masse des Verstärkungsteils oder die Tiefe, respektive die Geschwindigkeit der Intrusion.

Es ist weiterhin von Vorteil, wenn das Verfahren zusätzlich einen Schritt zur Erreichung der Minimalanforderungen und/oder Maximalanforderungen an das FE-Modell im Crashverhalten beinhaltet.

Dies würde gewährleisten, dass trotz gewichtsreduzierender Modifikationen am FE-Modell, insbesondere in Schritt iii) und/oder in einem möglichen Schritt zur Verringerung des Gewichts des Trägerteils 5 durch Materialverringerung, das FE-Modell den geforderten Minimalanforderungen und/oder Maximalanforderungen genügt. Solche gewichtsreduzierende Modifikationen bringen nicht nur den Vorteil der Gewichtsreduktion sondern senken auch zusätzlich den Materialaufwand.

Es ist weiterhin von Vorteil, wenn mindestens einer der Schritte i), ii), iii) und, falls vorhanden, die Schritte zur Verringerung des Gewichts des Trägerteils durch Materialverringerung und zur Erreichung von Minimalanforderung und/oder Maximalanforderungen an das FE-Modell im Crashverhalten mehrere Male durchlaufen werden.

Die Herstellung der Verstärkungsteile 4 kann auf verschiedenste Arten erfolgen. In einer möglichen Variante erfolgt die Herstellung im Spritzgussverfahren. Dabei kann beispielsweise ein Zweikomponenten-Spritzgussverfahren eingesetzt werden. Dabei kann beispielsweise zuerst eine erste Komponente, in diesem Fall das Trägerteil 5, gespritzt werden. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das Verbindungsmaterial, wird mit einem zweiten Spritzaggregat an die erste Komponente angespritzt.

Selbstverständlich besteht auch die Möglichkeit, das Verstärkungsteil 4 durch beliebige andere Herstellungsarten herzustellen.

Das Plazieren des Verstärkungsteils 4 im Hohlraum 3 des strukturellen Bauteils 2 geschieht vorzugsweise mit einem Clip 10, wie beispielsweise in Figur 4c gezeigt, welcher das Verstärkungsteil vor der Aktivierung des Verbindungsmittels 6 schnell und einfach mit dem strukturellen Bauteil verbindet und es an Ort und Stelle hält, da Zeitersparnis und Einfachheit der Montageschritte bei der industriellen Fertigung von grossem wirtschaftlichem Wert ist. Typischerweise ist der Clip 10 Teil des Verstärkungsteils. Weiterhin ist der Clip vorteilhafterweise von genügender Festigkeit, um das Verstärkungsteil trotz Strömungsbelastungen durch Flüssigkeiten, beispielsweise während Reinigungs-, Phosphatierungs- oder Tauchlackierungsbädern, an Ort und Stelle zu halten. Der Clip kann aus beliebigen Materialien bestehen. Bevorzugte Materialien sind jedoch jene Materialien, welche vorgehend schon als bevorzugte Materialien für das Trägerteil 5 genannt wurden.

Das Plazieren des Verstärkungsteils 4 im Hohlraum 3 des strukturellen Bauteils 2 kann jedoch auch auf jede andere Art und Weise erfolgen, insbesondere durch einfaches Verkeilen des Verstärkerteils im Hohlraum des strukturellen Bauteils.

Das Aktivieren des Verbindungsmittels 6 wurde vorhergehend erwähnt.

Selbstverständlich ist die Erfindung nicht auf die gezeigten und beschriebenen Ausführungsbeispiele beschränkt.

### Bezugszeichenliste

- 1: verstärkte Struktur
- 2: strukturelles Bauteil
- 3: Hohlraum
- 4: Verstärkungsteil
- 5: Trägerteil
- 6: Verbindungsmittel
- 7: höhere Verformungswahrscheinlichkeit
- 8: Krafteinwirkung
- 9: tiefere Verformungswahrscheinlichkeit
- 10: Clip
- 11: Rippe
- 12: Rippenträger
- 13: durchgehende Öffnung
- 14: Zwischenraum

## Patentansprüche

1. Verstärkte Struktur (1) umfassend ein strukturelles Bauteil (2) sowie ein im Hohlraum (3) des strukturellen Bauteils (2) angeordnetes Verstärkungsteil (4), wobei dieses Verstärkungsteil (4) ein Trägerteil (5) und ein, zwischen strukturellem Bauteil (2) und Trägerteil (5) angeordnetes, Verbindungsmittel (6) umfasst, **dadurch gekennzeichnet, dass** das Trägerteil (5) so im Hohlraum (3) angeordnet ist, dass der Abstand zwischen Trägerteil (5) und strukturellem Bauteil (2) an Stellen des strukturellen Bauteils (2) mit höherer (7) Verformungswahrscheinlichkeit bei Krafteinwirkung (8) von aussen auf das strukturelle Bauteil (2) kleiner ist gegenüber Stellen des strukturellen Bauteil (2) mit tieferer (9) Verformungswahrscheinlichkeit bei Krafteinwirkung (8) von aussen.

2. Verstärkte Struktur gemäss Anspruch 1, **dadurch gekennzeichnet, dass** die Krafteinwirkung (8) von aussen einem standardisierten Lastfall entspricht, insbesondere einem standardisierten Lastfall aus der Fahrzeugindustrie.

3. Verstärkte Struktur gemäss Anspruch 2, **dadurch gekennzeichnet, dass** der standardisierte Lastfall ein Lastfall bei Fahrzeugunfällen, insbesondere ein Blockanprall, Anprall gegen Hindernis, Schutzplanken-Anprall, Fahrzeug-Fahrzeug-Anprall, Seitenanprall oder Rückseitenanprall, ist.

4. Verstärkte Struktur gemäss einem der vorhergehenden Ansprüche, **dadurch gekennzeichnet, dass** die Verformungswahrscheinlichkeit empirisch und/oder theoretisch, insbesondere durch Zuhilfenahme eines FE-Modells des Verstärkungsteils (4) im Hohlraum (3) des strukturellen Bauteils (2), bestimmbar ist.

5. Verstärkte Struktur gemäss einem der vorhergehenden Ansprüche, **dadurch gekennzeichnet, dass** der Abstand zwischen Trägerteil (5) und strukturellem Bauteil (2) an der Stelle des strukturellen Bauteils (2) mit der höchsten Verformungswahrscheinlichkeit bei Krafteinwirkung (8) von aussen 20 - 0 mm, insbesondere 10 - 0 mm, bevorzugt 5 bis 0 mm, beträgt.

6. Verstärkte Struktur gemäss einem der vorhergehenden Ansprüche, **dadurch gekennzeichnet, dass** die Menge an Verbindungsmittel (6) zwischen strukturellem Bauteil (2) und Trägerteil (5) kleiner ist an Stellen des strukturellen Bauteils (2) mit höherer (7) Verformungswahrscheinlichkeit bei Krafteinwirkung (8) von aussen auf das strukturelle Bauteil (2) gegenüber Stellen des strukturellen Bauteils (2) mit tieferer (9) Verformungswahrscheinlichkeit bei Krafteinwirkung (8) von aussen.

7. Verstärkte Struktur gemäss einem der vorhergehenden Ansprüche, **dadurch gekennzeichnet, dass** das Verbindungsmittel (6) thermisch, durch Feuchtigkeit oder durch elektromagnetische Strahlung, insbesondere thermisch, aktiviert wurde.

8. Verstärkte Struktur gemäss einem der vorhergehenden Ansprüche, **dadurch gekennzeichnet, dass** das Verbindungsmittel (6) ein geschäumtes Material und/oder eine ausgehärtete Klebstoff ist.

9. Verstärkte Struktur gemäss einem der vorhergehenden Ansprüche, **dadurch gekennzeichnet, dass** das Trägerteil (5) mindestens eine Rippe (11) und mindestens einen Rippenträger (12), insbesondere mindestens einen im Wesentlichen senkrecht zur mindestens einen Rippe (11) angeordneten Rippenträger (12), aufweist.

10. Verstärkungsteil (4) zur Verstärkung von Hohlräumen (3) von strukturellen Bauteilen (2) umfassend ein Trägerteil (5) und ein Verbindungsmittel (6), welches aktivierbar ist und auf der Aussenseite des Trägerteils (5) angebracht ist, **dadurch gekennzeichnet, dass** das Trägerteil (5) so ausgeformt ist, dass nach der Aktivierung des Verbindungsmittels (6) der Abstand zwischen Trägerteil (5) und strukturellem Bauteil (2) an Stellen des strukturellen Bauteils (2) mit höherer (7) Verformungswahrscheinlichkeit bei Krafteinwirkung (8) von aussen auf das strukturelle Bauteil (2) kleiner ist gegenüber Stellen des strukturellen Bauteils (2) mit tieferer (9) Verformungswahrscheinlichkeit bei Krafteinwirkung (8) von aussen, wobei es sich bei der Krafteinwirkung (8) von aussen um einen Lastfall bei Fahrzeugunfällen, insbesondere ein Blockanprall, Anprall gegen Hindernis, Schutzplanken-Anprall, Fahrzeug-Fahrzeug-Anprall, Seitenanprall oder Rückseitenanprall, handelt und die Verformungswahrscheinlichkeit durch Zuhilfenahme eines FE-Modells des Verstärkungsteils (4) im Hohlraum (3) des strukturellen Bauteils (2) bestimmt wird.

11. Verstärkungsteil gemäss Anspruch 10, **dadurch gekennzeichnet, dass** die Menge an Verbindungsmittel (6) kleiner ist an Stellen des strukturellen Bauteils (2) mit höherer (7) Verformungswahrscheinlichkeit bei Krafteinwirkung (8) von aussen auf das strukturelle Bauteil (2) gegenüber Stellen des strukturellen Bauteils (2) mit tieferer (9) Verformungswahrscheinlichkeit bei Krafteinwirkung (8) von aussen.

12. Verstärkungsteil gemäss Anspruch 10 oder 11, **dadurch gekennzeichnet, dass** das Verbindungsmittel (6) thermisch, durch Feuchtigkeit oder durch elektromagnetische Strahlung, insbesondere thermisch, aktivierbar ist.

13. Verstärkungsteil gemäss einem der Ansprüche 10 bis 12, **dadurch gekennzeichnet, dass** das Verbindungsmittel (6) ein schäumbares Material und/oder ein Klebstoff, insbesondere ein Klebstoff, der bei der Aktivierung eine Expansion von 0 - 5 % aufweist, ist.

14. Verstärkungsteil gemäss einem der Ansprüche 10 bis 13, **dadurch gekennzeichnet, dass** das Trägerteil (5) mindestens eine Rippe (11) und mindestens einen Rippenträger (12), insbesondere mindestens einen im Wesentlichen senkrecht zur mindestens einen Rippe (11) angeordneten Rippenträger (12), aufweist.

15. Verstärkungsteil gemäss einem der Ansprüche 10 bis 14, **dadurch gekennzeichnet, dass** vor Aktivierung des Verbindungsmittels (6) der Abstand zwischen Verstärkungsteil (4) und strukturellem Bauteil (2) den Zugang von Flüssigkeiten, insbesondere Oberflächenbehandlungsflüssigkeiten, zu der dem Verstärkungsteil (4) zugewandten Oberfläche des strukturellen Bauteils (2) ermöglicht.

16. Verfahren zur Verstärkung von strukturellen Bauteilen (2) durch Platzieren von mindestens einem Verstärkungsteil (4), umfassend ein Trägerteil (5) und ein, aktivierbares und zwischen strukturellem Bauteil (2) und Trägerteil (5) angeordnetes, Verbindungsmittel (6), im Hohlraum (3) des strukturellen Bauteils (2), umfassend die Schritte
i) Erstellen eines FE-Modells des strukturellen Bauteils (2), in dessen Hohlraum (3) das mindestens eine Verstärkungsteil (4) angeordnet ist;
ii) Berechnung des Crashverhaltens des FE-Modells;
iii) Verringerung der Menge aktivierbaren Verbindungsmittels (6) an Stellen mit hoher Verformung gegenüber Stellen mit geringer Verformung des strukturellen Bauteils (2) im berechneten Crashverhalten des FE-Modells;
iv) Herstellung des Verstärkungsteils (4), welches eine Verteilung des Verbindungsmittels (6) entsprechend den Erkenntnissen aus den vorhergegangenen Schritten aufweist;
v) Plazieren des Verstärkungsteils (4) im Hohlraum (3) des strukturellen Bauteils (2);
vi) Aktivieren des Verbindungsmittels (6).

17. Verfahren gemäss Anspruch 16, **dadurch gekennzeichnet, dass** es sich bei dem Crashverhalten um ein Verhalten bei einem standardisierten Lastfall aus der Fahrzeugindustrie handelt, insbesondere einem standardisierten Lastfall bei Fahrzeugunfällen.

18. Verfahren gemäss Anspruch 16 oder 17, **dadurch gekennzeichnet, dass** das Verfahren zusätzlich einen Schritt zur Erreichung von Minimalanforderungen und/oder Maximalanforderungen an das FE-Modell im Crashverhalten beinhaltet.
